# EUROPEAN PATENT SPECIFICATION

(11) **EP 0 398 315 B1**
(45) Date of publication and mention of the grant of the patent: **02.03.1994**
(21) Application number: 90109290.8
(22) Date of filing: 16.05.1990
(51) Int. Cl.: A23L 1/325, A23L 1/33, A23P 1/12

(54) **Method and its apparatus of manufacturing fibrous fish or shellfish 'neriseihin' product**
Verfahren und Vorrichtung zur Herstellung eines faserigen "Neriseihin"-Produktes auf der Basis von Fisch oder Schalentieren
Procédé et installation de préparation d'un produit fibreux "neriseihin" à base de poisson ou coquillages

(30) Priority: 16.05.1989 JP 123980/89; 10.07.1989 JP 80971/89
(43) Date of publication of application: 22.11.1990
(73) Proprietor: NIPPON SUISAN KAISHA, LTD., Tokyo 100 (JP)
(72) Inventor: Sasaki, Isamu, Tachikawa-shi, Tokyo (JP); Yoshioka, Takeya, Kitakyushu-shi, Fukuoka (JP); Takahashi, Toshikatsu, Tokyo (JP); Sarukawa, Chuji, Machida-shi, Tokyo (JP)
(74) Representative: KOHLER SCHMID + PARTNER

(56) References cited:
- EP-A- 0 190 873
- JAPS / JPO; & JP-A-63 068 059 (HOSAKA HIDEAKI) 26-03-1988
- JAPS / JPO; & JP-A-63 068 060 (HOSAKA HIDEAKI) 26-03-1988

## Description

### PRIOR ART

Among "neriseihin" products prepared from fish or shellfish paste meat such as surimi or minched meat of fish and shellfish are known as Japanese food kamaboko, chikuwa and fish meat sausage. These "neriseihin" or fish or shellfish paste meat products are extensively markedted as food. To product such "neriseihin", edible part of fish and shellfish is kneeded with salt, seasoning, suitable additives and flavoring agents to produce paste meat, i.e., surimi and this paste meat is subjected to molding and heating and setting processes, in sequence, thus forming a fish or shellfish paste meat product or neriseihin having an elastic structure. A feature of the "neriseihin" is that the setting of the paste meat produces a three-dimensionally net-work structure of protein or the like, thus providing a certain elasticity. Recently, a tendency toward the food taste is changing with westernization and americanisation and diversification of the living standards, and accordingly kamaboko, chikuwa, fish and shellfish sausage and other fish and shellfish "neriseihin" are improved to meet western and american requirements. However, these products are not essentially improved. More specifically, even in improved neriseihin products the net-work structure of protein remains as such and can not always saitsfy demands for westernization and americanisation and diversification of the diet. Further, for an enhancement of health it is demanded that the salt content is as low as possible or zero. Nevertheless, for producing surimi from edible part of fish and shellfish it is necessary to add a comparatively large amount of salt so as to provide a certain degree of viscosity, by melting a protein contained in the edible part by addition of salt. This salt addition is undesired, however, from the health standpoint.

As example, Japanese Patent Publication 64-27 and Japanese Patent Disclosure 62-259565 disclose using surimi of fish and shellfish as a raw material, subjecting it to cutting and kneeding with salt or other additives and flavoring agent and seasoning agents to obtain surimi, producing strip-like moldings of the surimi, heating and setting the moldings to obtain a neriseihin product, i.e., kamaboko, then length-wisely cutting the product with a knife or the like to obtain many filaments and, then integrating these filaments by adding a binder of surimi to them and heating the integrated filaments using steam to produce neriseihin procucts resembling scallop meat or king crab leg meat. These food products are obtained by mechanically cutting "neriseihin" having usual kamaboko structure to form a fibrous structure like that of crab leg meat. Therefore, their appearance closely resembles natural scallop meat or king crab leg meat so that they can be hardly discriminated. However, although the individual filaments are thin and elongate, they retains a so-called kamaboko structure, i.e., a net-work structure, in which protein or the like is three-dimensionally coupled in a net like form. That is, their structure is essentially different from the structure of natural scallop meat or king crab meat. In addition, the conventional "neriseihin" product having kamaboko structure contains a comparatively large amount of salt, which is undesired form the health standpoint.

Japanese Patent Disclosure 63-68059 and Japanese Patent Disclosure 63-68060 disclose methods of producing a fibrous neriseihin product consisting a bundle of sligned fibrous elements, containing protein or the like linearly orientated, in order to closely resemble the structure of crab leg or shiump with the structure of the neriseihin itself. These methods are developed by utilizing a conventional technique that a twin screw extruder is used for a kneeding step to prepare a bread paste raw material. In detail, fish or shellfish material such as surimi is mixed with additives and seasoning agents to obtain a sol material, which is then converted into a gel material by heating it or adjusting to high viscosity. Thus-obtained gel material having high viscosity is then kneeded and thermally fused in a twin-screw extruder. The fused material is then extruded via an outlet of the leading end of the extruder, thereby carrying out an aligned orientation of protein molecules or the like by making use of a shearing effect of the twin-screw extruder. Subsequently, each of the resultant aligned filaments is separated by using water. Then, the separated aligned filaments are mixed with fish and shellfish surimi containing salt, and the resultant mixture is molded into a desired shape and then set, followed by boiling or heating, resulting in fibrous neriseihin product. The neriseihin which is obtained in this way, unlike the prior art kamaboko structure, has a structure, in which filaments having protein molecules aligned in a direction are randomly coupled together and intgrated. This structure resembles the structure of natural crab or shrimp meat and fits the aim of westernization, americanisation, or diversification of living standards to a certain extent. These method utilizes the conventional technique that a twin-screw extruder is used in a kneeding process to prepare bread paste raw material having high viscosity. In other words, each of these methods is merely a method in which instead of bread paste raw material, fish and shellfish raw material is processed with a twin-screw exturder to carry out an orientation of filaments consisting of protein linearly aligned. However, owing to unsatisfied orientation of filaments toward one direction, these oriented filaments are respectively separated and then randomly coupled together. For easily processing fish and shellfish material with a twin-screw extruder in this method, the sol material having low viscosity is pre-heated or adjusted to high viscosity by adding starch, salt, etc. in order to change its character to be close to the character of bread paste raw material. However, in spite of the fact that a product free from salt is desired, without addition of salt a viscosity like that of bread paste raw material can not be obtained. Therefore, a desired product free from salt can not be produced. In addition a preparation of raw material having high viscosity owing to a twin screw exturder having a prior art structure can not give a rise to satisfied orientation of protein or the like, resulting in a product having imperfect protein orientation structure, which can not be used as a desired marketable product. Accordingly, the unsatisfied orientated product processed through a twin-screw extruder is disjointed by agitating it in water. The disjointed elements are then mixed with salt-containing surimi as binder, and the mixture is steamed or boided to obtain a neriseihin as a marketable product. In such method, a finishing process is required after the process in the twin-screw extruder, and therefore, the overall process of manufacture is complicated. In addition, in the finishing process, the product having a slightly imperfectly oriented structure is disjointed, and the disjointed elements are mixed with a binder before molding into a desired form. Therefore, it is impossible to obtain a product in which filaments having a satisfied orientation of protain molecules are unformly aligned in a certain direction.

In greater detail, a prior art extruder, which is used to prepared bread paste raw material or like, comprises mainly of a cylindrical barrel and a screw rotatable therein. The screw is provided on a screw shaft. A raw material mainly composed of flour is transported by the action of the screw, and during this time individual components of the material are kneeded together to obtain bread paste raw material. The raw material in the cylindrical barrel can be heated. The heating is usually effected by heating the cylindrical barrel itself with steam or an electric heater or by introducing steam into the material. The outlet end of the cylindrical barrel is throttled to form a nozzle or an orifice. With this throttled end, the material being transported by the screw is pressurized to increase its pressure. As an extruder, a uni-screw extruder with a single screw rotatably accommodated in a cylindriacal barrel has been used, but recently there is a trend for using a twin-screw extruder, which has high material transportation capacity compared to the uni-screw extruder. The twin-screw extruder is capable of change of screws depending on the characteristics of the material and purpose of processing, and also it can process materials having high oil contents. For these reasons, it is used for preparing bread paste material.

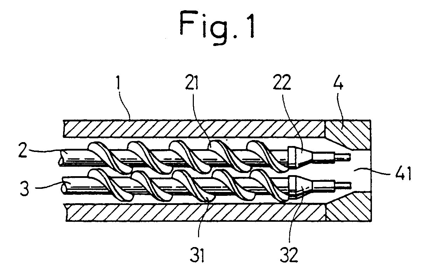

Fig. 1 shows part of a typical example of the same direction rotation type twin-screw extruder. As it is shown, two screw shafts 2 and 3 are provided for rotation in same directions in cylindrical barrel 1. Screws 21 and 31 on these screws shafts 2 and 3 rotated in mesh with each other. Flock nuts 22 and 32 are provided at the ends of screw shafts 2 and 3, and barrel die 4 is provided in the vicinity of flock nuts 22 and 32. Barrel die 4 has substantially central orifice or nozzle-like outlet 41. In cylindrical barrel 1, two screw shafts 2 and 3 are rotated in same directions. With this rotation, material is kneeded and compressed while it is transferred by screws 21 and 31. During this time, material is heated by a heating element (not shown) in cylindrical barrel 1 and internal heat generated at the time of applying shearing stress to the material by screws 21 and 31. Since the end of cylindrical barrel 1 is throttled with barrel die 4, material is pressurized as it is transferred. With a twin-screw extruder this pressure is increased to a pressure higher than the steam pressure. Therefore, neither effervescence nor splash takes place in cylindrical barrel 1. As material is extruded from outlet 41 of barrel die 4 into atmosphere, it is inflated to generate high pressure steam, so that the material is liable to be scattered and become fine particles. That is, a phenomenon of flashing is liable to occur to spoil the moldability of the product. Particularly, when the material has high viscosity and contains little moisture, this trend is promoted to spoil regular orientation, and a spructure having uniformly aligned filaments can not be obtained.

To avoid this phenomenon, it is in practice to cool the material at outlet 41 of barrel die 4. However, even by cooling the material in this way the flashing can not be perfectly avoided. Rather, when the material is cooled locally at outlet 41, clogging is caused to vary the pressure in cylindrical barred 1 and sometimes result in explosive discharge of material. Therefore, it is impossible to control the discharge and to obtain a molding having a disired shape.

United States patent specification 4,816,278 disclose a method, in which, for avoiding the flashing when processing the fish or shell fish raw material a long tubular nozzle is coupled to the end of a cylindrical barrel such as to hold the material in a fused state in a first half of the nozzle while cooling the material to 100° C or below in the second half of the nozzle, thus attaining a fibrous structure. However, while the flashing can be avoided with this long nozzle, the cooling zone is constituted by only one half of the length of the nozzle and is insufficient for providing an aligned orientation. Besides, the nozzle having the first heating or fusing zone and second cooling zone has a considerable overall length and offers high contact resistance. Therefore, material can not be continuously and steadily supplied into the long tubular nozzle only by with the sole extruding force of the twin-screw extruder.

### SUMMARY OF THE INVENTION

According to the invention, fish and shellfish material is fed into an inlet end of a twin-screw extruder having the outlet end connecting with a long cooling zone via a feed pump, and the fed material is kneeded, pressureized and thermally fused in the extruder. The resultant heated fused material is then into the cooling zone for cooling over the entire length thereof. Particularly, at the end of the extruder, the temperature of the heated fused material is held at 150 to 260 ° C, and the heated fused material is cooled sown to 60 to 110° C, while providing a temperature gradient of 0.05 to 0.35° C/cm in the cooling zone in the length direction thereof. Therefore, if the fish and shellfish raw material is preliminarily heated or boiled into the state of a gel, at the time of extruding the heated fused material from the outlet of the extruder, are produced fibrous filaments having a linear alignment of the portein or the like therein, and then in the cooling zone, each of filaments is aligned and oriented in a direction parallel to the axis of the cooling zone, resulting in parallel oriented filaments. Thus, fibrous neriseihin product consisting of parallel oriented filaments can be obtained. If the fish and shellfish raw material is processed while it is in the state of a sol without such preliminary heating, by varying both the heating condition at the outlet end of the twin screw and cooling condition in the cooling zone, each of filaments is aligned and oriented in an obliquely radial direction to form radially oriented filaments, in cooling zone, thus obtaining a fibrous neriseihin product consisting of these radially oriented filaments.

Further, fish and shellfish raw material may be used salt-containing surimi obtained by cutting and kneeding edible part of fish and shellfish with salt, and also salt-free surimi obtained by cutting and kneeding edible part of fish and shellfish without adding any salt.

According to the invention there is provided an apparatus, which comprises a twin-screw extruder including two screws rotated in same direction for kneeding, pressurising and thermally fusing fish and shellfish raw material being forcibly fed by the screws and extruding the resultant heated fused material from and outlet of the extruder, a plurality of branch tubes coupled to the outlet end of the extruder, feed pumps coupled to the outlet ends of the respective branch tubes for constantly feeding out the heated fused material from the extruder while it is in the heated and fused state, and cooling zones independently coupled to the outlets of the respective feed pumps, in which cooling zone the heated and fused material continuously supplied from the individual feed pumps is gradually cooled from the outer periphery of the material.

Thus, it is possible to feed fish and shellfish raw material constantly, at a constant rate and without interruption regardless of the moisture content and viscosity of the material or regardless of whether the material is in the state of a gel or a sol. Further, a fibrous neriseihin product having fibrous filaments consisting linearly aligned protein or the like can be readily obtained by varying the cooling condition of the long cooling zones through control of the revolving rate of the feed pumps.

### BRIEF DESCRIPTION OF THE DRAWINGS

Fig. 1 is a sectional view showing part of a prior art twin-screw extruder;
Fig. 2 is a sectional view showing an apparatus for manufacturing fibrous fish and shellfish neriseihin product as one embodiment of the invention;
Fig. 3 is a sectional view showing an apparatus for manufacturing fibrous fish and shellfish neriseihin product as a different embodiment of the invention;
Fig. 4 is a sectional view showing an apparatus for manufacturing fibrous fish and shellfish neriseihin product as a further embodiment of the invention;
Fig. 5 is a sectional view showing an apparatus for manufacturing fibrous fish and shellfish neriseihin product as a still further embodiment of the invention;
Fig. 6 is a perspective view showing an example of fish and shellfish neriseihin product manufactured by the method according to the invention;
Fig. 7 is a sectional view taken along line A-A in Fig. 6;
Fig. 8 is a view showing the fibrous fish and shellfish neriseihin product shown in Fig. 7 with a filament teared in one direction;
Fig. 9 is a sectional view showing a fibrous fish and shellfish neriseihin product according to a further embodiment of the invention.

### BEST MODE OF CARRYING OUT THE INVENTION

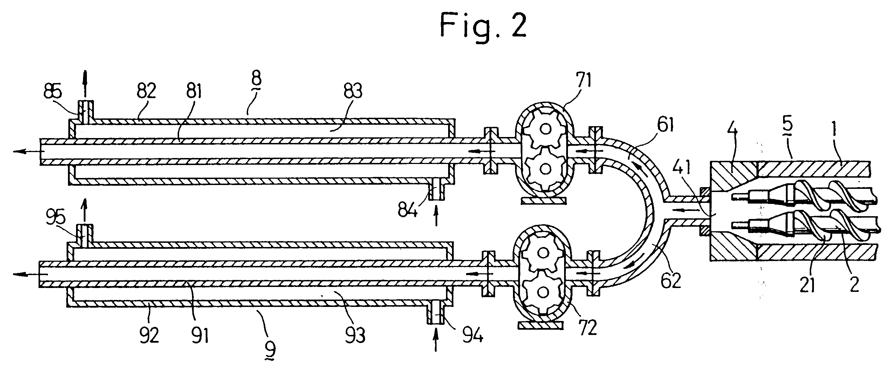

Referring now to Figs. 2 to 5, reference numeral 5 designates a twin-screw extruder. This twin-screw extruder 5 has the same construction as the prior art twin-screw extruder shown in Fig. 1. As shown in Fig. 1, the extruder comprises cylindrical barrel 1 and a pair of screw shafts 2 and 3. Screw shafts 2 and 3 are provided in cylindrical barrel 1, and screws 21 and 31 are provided on screw shafts 2 and 3. Screw shafts 2 and 3 are rotated in same directions. With this rotation, fish and shellfish raw material supplied to cylindrical barrel 1 at the rear end thereof (not shown in Fig. 1) is transported to the outlet end of the barrel 1 without reverse flow. As it is transported, fish and shellfish material is kneeded and heated by a heating element (not shown) provided on the inner wall surface of cylindrical barrel 1. With this kneeding and heating, the material is rendered to be a fused and heated material and loses its fish and shellfish structure. The material in this state is discharged from substantially central outlet 41 of barrel die 4 provided at the outlet end of cylindrical barrel 1. Outlet 41 is nozzle or orifice-like in shape. Thus, fish and shellfish material transported by screws 21 and 31 is thermally fused under a pressurized condition, and heated fused mateial is extruded from outlet 41.

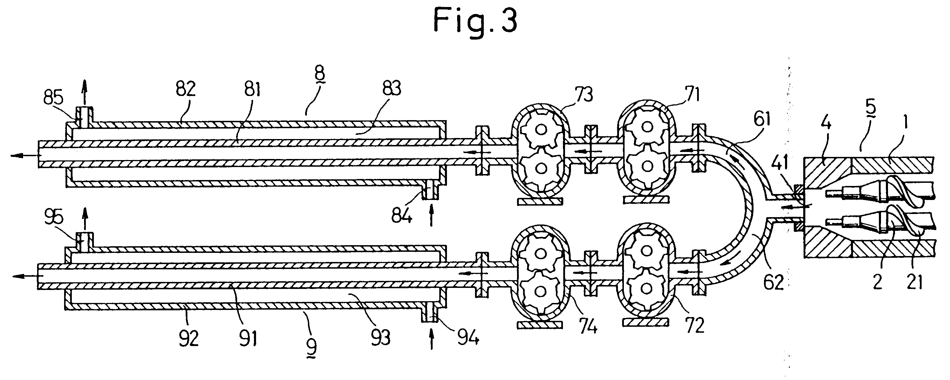

A plurality of branch tubes 61 and 62 are respectively coupled to the outlet end of the extruder 5, i.e., outlet 41. Branch tubes 61 and 62 are not desired to have too small length, but they have a sufficient length as shown in Figs. 2 and 3, and at least one feed pump is coupled to the outlet end of each of these branch tubes 61 and 62. More specifically, in the case of Fig. 2 feed pumps 71 and 72 are coupled to respective branch tubes 61 and 62, while in the case of Fig. 3 two feed pumps 71 and 73 (72 and 74) are coupled to each of branch tubes 61 and 62. Feed pumps 71 to 74 are of a type normally capable of feeding heated fused material supplied through branch tubes 61 and 62 continuously and at a constant rate. As this type of pump, volume pumps, particularly gear pumps, are suitable. This is so because a volume pump is suited for extruding heated fused material constantly with rotating rotor or gear. As such pump, commerically available gear pumps are very inexpensive and can attain sufficiently constant feed.

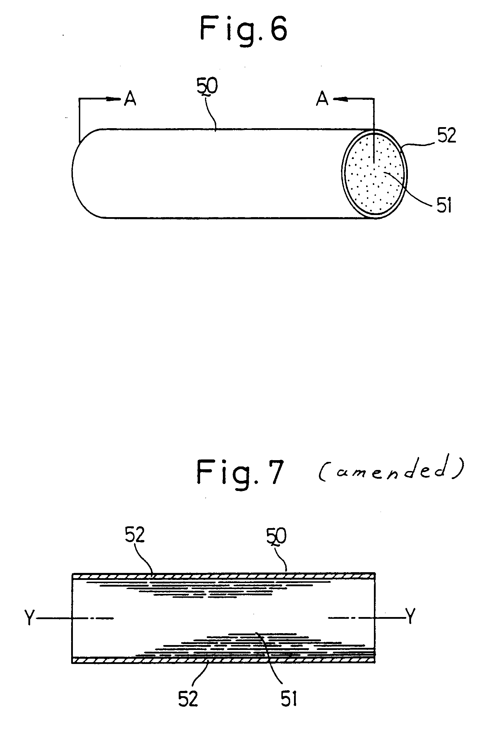

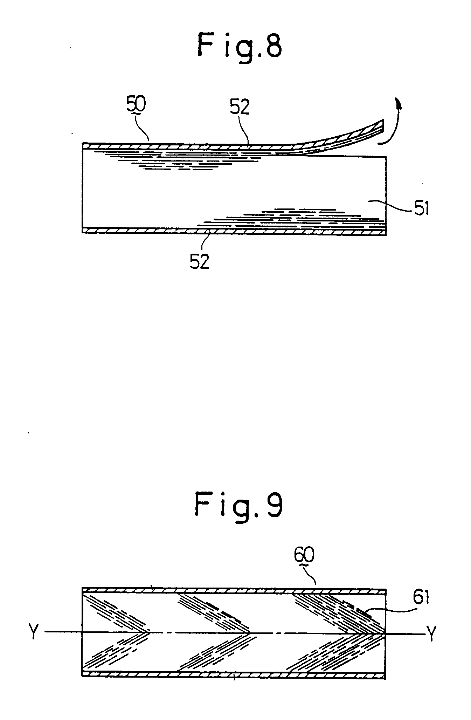

With a plurality of branch tubes 61 and 62 coupled to the outlet end of the extruder 5, individual branch tubes 61 and 62 set to have a somewhat large length and feed pumps 71 to 74 such as volume pumps mounted at the outlet ends of branch tubes 61 and 62, troubles at outlet 41 of twin-screw extruder 5 can be precluded, and heated fused material can be very smoothly supplied to cooling zones 8 and 9 to be shown later in detail. In cooling zones 8 and 9 the heated fused material is cooled under a predetermined cooling condition through control of the revolving rate of the feed pumps, and fish and shellfish neriseihin having a fibrous structure consisting of aligned elements as shown in Figs. 7 and 9 is obtained.

As has been mentioned, the kneeding, heating, shearing and fusing of fish and shellfish raw material in the extruder are effected under a considerable pressure, and the pressure in the extruder is higher than the vapouring pressure of water contained in the material so that inflation of fish and shellfish material or heated fused material never takes place in the extruder. However, when the material is discharged from outlet 41 to stmosphere as in the prior art extruder shown in Fig. 1, explosion of moisture content and inflation of heated fused material take place to result in generation of commonly termed crushed material to be extruded as small pieces or masses, that is, the heated fused material is extruded internmittently and not constantly. For this reason, as mentioned before it is in practice to cool barrel die 4, as shown in Fig. 1 or a nozzle, connecting with the die 4, which holds heated state of material in the first half and cools material in the second half of the nozzle, as disclosed in United States patent specification 4,816,278. With the former measure, only local cooling is provided, and clogging is rather produced at the outlet. With the latter measure, the nozzle has a large length and offers high contact resistances, and thereofore it is difficult to obtain constant extrusion of heated fused material with the sole extruding force of the extruder.

These measures, therefore, are inadequate for gradually cooling heated fused material under adequate cooling condition to obtain fibrous fish and shellfish neriseihin product having such structure as shown in Figs. 7 and 9 as according to the invention.

According to the inveniton, cooling zones 8 and 9 are not directly connected to the outlet ends of branch tubes 61 and 62, but at least one feed pump, 71 to 74, is provided between each of branch tubes 61 and 62 and each of cooling zones 8 and 9, while constructing branch tubes 61 and 62 to have a large length. More specifically, cooling zones 8 and 9 are constructed to have a very large length, for instance 3 to 7 m. Therefore, even if heated fused material is extruded intermittently from the extruder 5 into branch tubes 61 and 62, the intermittence is eliminated while the heated fused material is retained in branch tubes 61 and 62, and the material is charged into branch tubes 61 and 62 without being cooled but in the heated and fused state uniformly and over the entire length. If the length of branch tubes 61 and 62 is insufficient, the intermittence of extrusion of material from the extruder 5 can not be perfectly absorbed. With branch tubes 61 and 62 constructed to have a sufficient length, the extruding force of the extruder 5 has not any influence on a transference of feeding heated fused material in cooling zones 8 and 9. Particularly, since cooling zones 8 and 9 are cooled over the entire length, the viscosity of heated fused material is greatly increased, and material can not be constantly fed out due to increase of the contact resistance of cooling zones 8 and 9. For this reason, according to the invention the heated fused material is not fed to cooling zones 8 and 9 by making use of the extruding force of twin-screw extruder 5, but is fed to cooling zones 8 and 9 through branch tubes 61 and 62 with interposed feed pumps. With this arrangement, the material can be fed smoothly. The cooling rate in cooling zones 8 and 9 can be readily controlled by controlling the revolving rate of feed pumps. 71 to 74.

Cooling zones 8 and 9 connected to branch tubes 61 and 62 have a length of 3 to 7 m, preferably 3.5 to 5.0 m and can cool material over the entire length. Cooling zones 8 and 9 are cylindrical and have a double-wall structure with cooling water passages 83 and 93 defined between inner tubes 81 and 91 and outer tubes 82 and 92. Cooling water is introduced in the direction of arrow from inlets 84 and 94 of cooling zones 8 and 9 and drained from outlets 85 and 95. As cooling water passes through cooling water passages 83 and 93, heated fused material passing through inner tubes 81 and 91 are cooled from their outer periphery. As a result, fibrous filaments having aligned protein molecules are orientated toward contain direction so as to obtain a fibrous structure as will be described later in detail.

Namely, when fish and shellfish raw material is heated and fused in the extruder, its structure is perfectly lost. When the heated fused material is cooled, the viscosity of material is increased, and this increased viscosity material is prevented against inflation with the heated fused material serving as plug. In addition, protein or the like contained in the material is forcibly aligned by cooling, and this alignment is promoted in the direction of action of shearing force generated with movement of the material and cooling thereof in the radial direction. Thus, in cooling zones 8 and 9 orientation toward one direction of filament consistiong of aligned protein as shown in Figs. 7 and 9 can be obtained by controlling the revolving rate of pumps 71 to 74 and rate of supply and temperature of cooling water. These conditions may be determined according to the afore-noted condition, but where cooling zones 8 and 9 have a length in a range of 3 to 7 m it is suitable that heated fused material at 150 to 260 ° C at the inlet is cooled gradually to provide a temperature pradient of 0.05 to 0.35 ° C/cm to 60 to 110 ° C at the outlet.

Comparing Figs. 2 and 3, in the case of Fig. 2 feed pumps 71 and 72 are each provided on each of branch tubes 61 and 62, while in the case of Fig. 3 two feed pumps 71 and 73 (or 72 and 74) are provide on each branch tube. Feed pumps 71 to 74 serve to feed heated fused material to cooling zones 8 and 9. With the arrangement as shown in Fig. 3 the discharge of material into cooling zones 8 and 9 can be readily controlled to steadily promote the orientation of filaments and readily obtain a fibrous structure having filaments orientated toward certain direction.

Products having various shapes can be obtained by varying the shape of the discharge protion of each cooling zones 8 and 9.

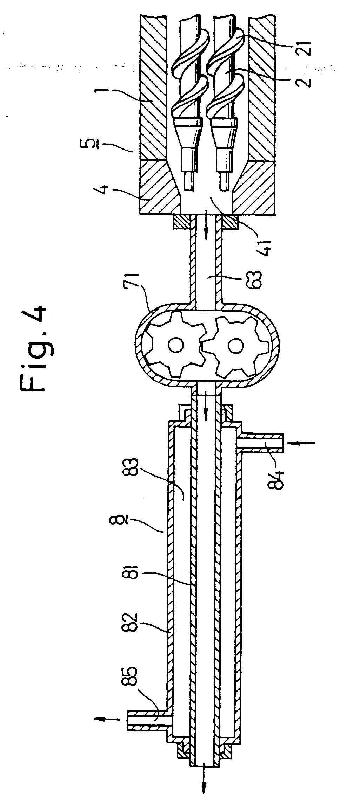

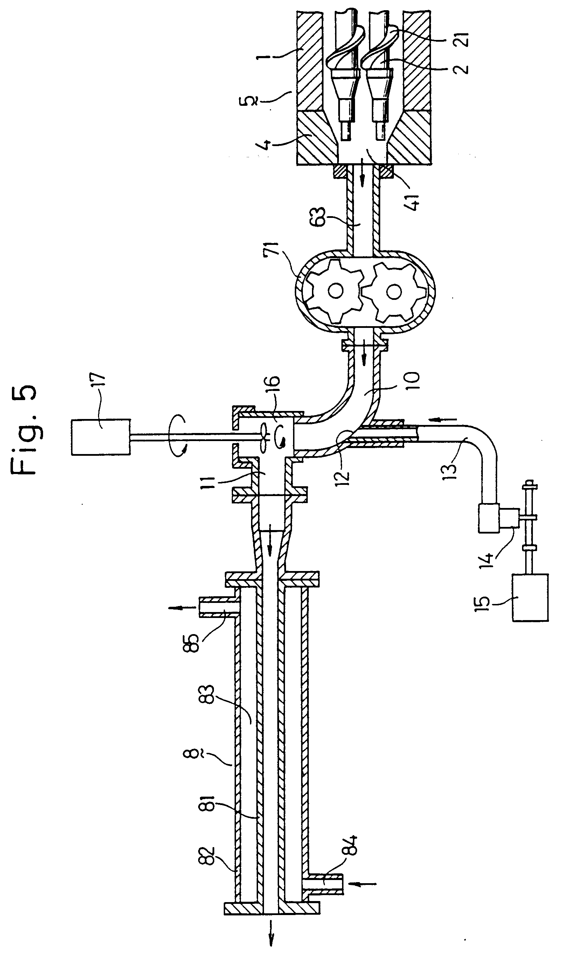

In the example of Fig. 2 or 3, two feed pumps 71 and 72 or four feed pumps 71 to 74 are coupled to the outlet end of the extruder 5 via a plurality of branch tubes 61 and 62. However, as shown in Fig. 4 and 5 a single coupling tube 63 may be coupled to the extruder 5, and one or more fed pumps 71 may be connected to the outle end of coupling tube 63. With this arrangement 63 the same effects may be obtained by setting a comparatively large length of coupling tube 63. In the cases of Figs. 4 and 5, however, the productivity is reduced compared to the cases of Figs. 2 and 3 where branch tubes 61 and 62 are provided.

Among the examples in which the extruder 5 is coupled via single coupling tube 63 to feed pump 71, the arrangement shown in Fig. 5 is one, in which a seasoning agent, flavoring agent or the like is added in a portion between feed pump 71 and cooling zone 8. In Fig. 5, first coupling tube 10 is coupled to the outlet end of feed pump 71, second coupling tube 11 is connected to the outlet end of first coupling tube 10, and cooling zone 8 is connected to the outlet end of second coupling tube 11. An inlet 12 of additive agents is provided on first coupling tube 10 at an intermediate position thereof, and the inlet 12 is connected to additive agent feeding means 14 via pipe 13, and means 14 is driven by motor 15. Agitating unit 16 is provided between first and second coupling tubes 10 and 11 and is driven by motor 17. With the arrangement of Fig. 5, an additive agent is added from the inlet 12 to the heated fused material being fed by feed pump 71, and the resultant material is agitated in agitating unit 16 to be fed continuously to cooling zone 8.

Using the apparatus as shown above, it is possible to manufacture from fish and shellfish raw material a fibrous neriseihin, in which fibrous filaments containing aligned protein are orientated toward one direction, i.e., in parallel with the axis Y-Y, as shown in Fig. 7. It is also possible to manufacture a fibrous neriseihin, in which fibrous filaments are radially and obliquely orientated toward the axis Y-Y as shown in Fig. 9.

When manufacturing the former product with parallel fibrous filaments, the fish and shellfish material is used not in a state of sol but in a slightly gelated state obtained by preliminary heating before processing in the extruder. As for material, frozen or non-frozen surimi, minched meat or other edible part of fish and shellfish, meat such as chicken, pork, beef is used as a main material, among raw material, and livestock fat, starch, gluten, bean protein, gelatine, casein and so forth are added as desired. Where surimi or minched meat is used, salt may be added as in the prior art, or it may not or very lightly be added. In the latter case, the material, salt-free surimi or minched meat used as a raw material. The apparatus shown in Figs. 2 to 5 can process salt-free surimi or minched meat without containing any add salt and having very low viscosity. The surimi or minched meat is condition as in the prior art regardless of whether salt is added or not. As an example, surimi is obtained by collecting edible part of fish and shellfish, then exposing the meat of edible part to water, then dehydrating the meat and then adding sugar, sorbit and phosphate to the meat for preventing deterioration thereof. Minched meat is obtained when meat after exposing to water and dehydrating is cut to masses with diameter size of 1.0 cm or below through as a shieve of a conventional minched meat preparation machine. Surimi or minched meat may be stored in a frozon state. When processing the meat, it is defrozen, then egg white, salt, sarch, seasoning agent, flavoring agent, etc. are add as desired, and the resultant mixture is cut to obtain a sol using a silent cutter or the like. This sol is heated at 80 to 90 ° C for 30 to 60 minutes, and then it is set by taking sufficient time, thus obtaining kamaboko, i.e., a fibrous neriseihin of fish and shellfish having a structure, in which protein is coupled in a three-dimensional net-work structue. This kamaboko is then cut with a chopper or a cutter into pieces with a diametric size of 1.0 to 3 mm, preferably around 2.5 mm.

These pieces of surimi or like, obtained after heating, is supplied as raw material of fish and shellfish to the extruder 5 shown in Figs. 2 to 5 for kneeding, heating and fusing in the twin-screw extruder.

As suitable conditions or processing in twin-screw extruder 5, the rate of feed of raw material is 60 kg/h, screw shaft revolving rate is 170 to 200 rpm, pressure is 5 to 20 kg/cm, and cylindrical barrel temperature is 150 to 260 ° C, preferably 170 to 190 ° C. Suitably, a temperature gradient is provided in the extruder from the inlet to the outlet thereof.

The heated fused material obtained in this way is fed through the branch tubes and coupling tubes without being cooled in the barrel die. The branch tubes and coupling tubes are comparatively long as noted above. Therefore, when a raw material having viscosity is discharged intermittently from the outlet of the barrel die, the intermittence is lost, as the material is retained in the branch tubes and coupling tubes, and the material is fed at a constant rate to feed pumps 71 to 74. In this way, the heated fused material is fed to cooling zones 8 and 9 at a rate determined by the revolving rate of the feed pumps. The heated fused material is gradually cooled down only after it entres cooling zones 8 and 9 having a length of 3 to 7 m, for instance. The material is cooled such as to provide a temperature gradient of 0.05 to 0.35 ° C/cm and down to 60 to 110 ° C, and a rod-like product as shown in Fig. 6 is obtained as final neriseihin product 50 of fish and shellfish.

Neriseihin product 50 shown in Fig. 6 is rod-like and has a circular sectional profile and comprises mainly of fibrous filaments 51 and surface layer 52 covering over filaments 51. Its surface layer 52 has a smooth tactile impression, and in its structure as shown in Fig. 7 innumerable filaments 51 with diameter ranging from the order of µm to the order to millimeters, usually less than 1.0 mm, are coupled together. Individual filaments 51 are orientated toward one direction, i.e., in parallel with the axis or in radial and oblique direction toward the axis.

Thus, holding some filaments 51 when eating the product, the product is teared apart as shown in Fig. 8. The product thus can be freely teared apart in the length direction at a desired position when eating it. Neriseihin 50 need not have a circular sectional profile, but may be oval or angular, such as triangular, tetrangular, polygonal, or hollow as well. In this neriseihin 50, protein or the like contained in individual filaments 51 are linearly aligned at the time of extrusion of the extruder 5, and in cooling zone 8 and 9 individual filaments 51 are orientated toward one direction and coupled together to such an extent that they are not decoupled even when it is charged into and agitated in water. More specifically, since fish and shellfish material mainly consists of pieces preliminarily set by heating, and the heated fused material obtained after kneeding and heating in the extruder has retained character of the pieces and has high viscosity. Thus, its components, i.e., filaments tend to be aligned with respect to the direction of movement of material and not substantially with respect to other directions while material is gradually cooled in the cooling while holding the above tendency, individual filaments are continuous as long filaments in the length direction, and in this state they are coupled together when they are solidified.

When manufacturing a fibrous neriseihin, in which fibrous filaments consisting of protein and like components coupled together are orientated radially, particularly radially obliquely, toward the axis, raw material of fish and shellfish is processed in the apparatus as shown in Figs. 2 to 5 while it is in the state of sol. The heating condition in the extruder and cooling condition in the cooling zones are varied to provide for slightly lower pressure, whereby the product can be readily manufactured.

As raw material of fish and shellfish, like the above case, surimi or minched meat is used as main material, and also like the above as auxiliary material are used livestock fat, paste meat, starch, gluten, beam protein and other coupling agents, as well as seasoning agent, coloring agent and other ordinary additives. In this case, salt-free surimi or minched meat may be prepared without adding any salt. While surimi or minched meat may be prepared as in the prior art as noted before, it is directly used as raw material of fish and shellfish in the state of sol containing with a water content of 70 weight parts or above for processing in the apparatus as shown in Figs. 2 to 5. By so doing, neriseihin 60 of fish and shellfish having a structure as shown in Fig. 9 can be obtained. The product has radially obliquely orientated filaments 61, and its structure resembles crab leg meat.

Generally, if material has high water content and low viscosity when it is processed using a extruder, the extrusion moldability is spoiled, and required energy for molding is extremely increase due to high water content. For this reason, the material in the state of sol is desirably gelated in advance by heating to reduce the water content and viscosity before processing. According to the invention, however, cooling zones 8 and 9 capable of cooling over the entire length are provided via feed pumps 71 to 74 as shown in Figs. 2 to 5, and thus the material can be processed while it is in the state of sol to obtain a neriseihin having a structure as shown in Fig. 9. More specifically, with a high water content, high viscosity material, sufficient fluidity of protein and other compounds can be obtained, and filaments formed as a result of cooling and solidification from the outer periphery are subjected to a shearing action and radially orientated to form the structure. If the water content is less than 70 weight parts, the fluidity is spoiled, and filaments formed by cooling are not orientated radially. In the case of salt-containing surimi and minched meat, even with appearance of salt-soluble protein the viscosity remains low because of high water content. With salt-free surimi or minched meat, substantially no salt-soluble protein appears, and the viscosity is low, thus permitting satisfactory fluidity or protein or the like to be ensured.

When using raw material of fish and shellfish in the state of sol, by setting a slightly higher temperature heating condition of the extruder, particularly 10 to 20° C higher than the condition for obtaining the structure shown in Fig. 9 and correspondingly controlling the cooling condition of the cooling zones, a neriseihin having a structure as shown in Fig. 7 can be obtained.

In either case, the product obtained from the cooling zones need not have a circular sectional profile but may have any other suitable shape as well.

### Example 1

Edible part of Alaska pollack was collected, exposed to water and then dehydrated. To this material were added 5 wt. parts or sorbit and 0.2 wt. part of phosphate, and the resultant material was cut and kneeded. To this material were added 3 wt. parts of starch, and the resutant material was sufficiently kneeded with a silent cutter. The resultant material, which was in the form of sol was used as raw material and charged into the twin screw extruder of the apparatus shown in Fig. 2 for processing under the following conditions to obtain a rod-like neriseihin (with a diamater of around 18 mm).

The rate of supply of material to the extruder was 60 kg/h, revolving rate of the extruder screw shafts was 170 to 200 rpm, the extruder cylindrical barrel temperature was 170 ° C at an intermediate position and 200 ° C at the outlet, and the dimensions of the cooling zones were 18 mm (inner diameter) by 4 mm (length).

Stable supply and flow of material and smooth operation could be obtained by controlling the revolving rate of gear pumps as feed pumps. The material was perfectly fused and kneeded in the extruder, and the heated fused material was cooled down to 170 ° C as it passed through the branch tubes and then cooled down to 95° C in the cooling zones. The temperature gradient at the time of cooling was 0.255 ° C/cm.

The rod-like neriseihin which was obtained had a slippery skin. The product had a fibrous structure as shown in the sectional view of Fig. 7, with individual filaments alinged to be parallel to the axis. The product had excellent taste and touch to the mouth. It was seen that the product could be teared over the entire length in the direction of filament alignment without being broken at all.

### Example 2

To 50 wt. parts of Alaska pollack surimi obtained in the above way were added 30 wt. parts of pig meat, 10 parts of water and 2.6 wt. parts of salt as well as flavoring agent, seasoning agent and coloring agent, and the resultant material was kneeded with a silent cutter to obtain a sol. Subsequently, the sol was boiled at 90 ° C for 60 minutes to obtain a gel, which was then processed with a chopper into pieces with a diametr 5 mm. These pieces were processed as raw material with the apparatus shown in Fig. 2 under the same conditions as in Example 1, thus obtaning a system having a structure as shown in Fig. 2. This product was cut to a suitable length, then packed and sterilized to obtain a novel sausage as shown in Fig. 8, with individual filaments capable of being teared in the longitudinal direction.

### Example 3

Insead of Alaska pollack edible part of squid belonging to mollusc and krill belonging to crustacea was exposed to water, dihydrated, kneeded and cut to obtain surimi. To this surimi was added salt and starch as in Example 1, and the resultant mixture was heated into a gel and cut with a choper into pieces with a diameter of 2.0 mm.

These pieces were procesed with the apparatus shown in Fig. 2 under the same conditions as in Example 1 to obtan a neriseihin having a structure as shown in Fig. 7.

### Example 4

Edible part of Alaska pollack was collected and, as in Example 1, was exposed to water and degydrated. To this material were added 5 wt. parts of sorbit and 0.2 wt. part of phosphate. The resultant mixture was cut to obtain surimi. To this surimi were added 3 wt. parts of salt and 3 wt. parts of starch. The resultant mixture awas kneeded with a silent cutter to obtain a sol. This sol contained 73 wt. % of water, and it was supplied to the twin screw extruder of the apparatus shown in Fig. 2 for processing under conditions of a material feed rate of 35 kg/h, a screw shaft revolving rate of 175 rpm, cylindrical barrel intermediate temperature of 170 ° C and a barrel outlet temperature of 220 ° C. In the cooling zones, the material was coled with a temperature gradient fo 0.325 ° C/cm down to 95 ° C.

As a result, a rod-like neriseihin as shown in Fig. 6 could be obtained. This neriseihin, like that in Example 1, had a thin slippery skin layer, and in its sectional profile individual filaments were radially obliquely orientated. This neriseihin was teared by holding a portion, and at this time filaments were teared in the direction of their orientation, i.e., a radially oblique direction.

The surimi obtained the above way was kneeded without addition of any salt but together with only 3 wt. parts of starch into a sol, which was then processed in the same way as above to obtain a neriseihin having a similar structure.

### Example 4

Surimi of krill and squid in Example 2 were converted to sol with and without addition of 3 wt. parts of salt, and these sols were similarly processed to obtain neriseihins as shown in Fig. 9, in same condition as shown in Example 2, except the condition, such as barrel intermediate temperature equal to 165 ° C and barrel leading and temperature equal to 200 ° C.

Among "neriseihin" or (fish paste meat products) prepared from paste meat such as surimi or minched meat of fish and shellfish are known as Japanese food kamaboko, chikuwa and fish meat sausage. These "neriseihin" or fish paste meat products are extensvety markedted as food. To produce such "neriseihin", surimi edible part of fish and shellfish is cut and mixed with salt, seasoning, suitable additivesand flavoring agents to produce so-called paste meat, and this paste meat is subjected to molding and heating and setting processes, seqiuently, thus forming a paste meat product having an elastic structure. A feature of the "neriseihin" is that the setting of the paste meat produces a three-dimensionally net-work structer or structure of protein or the like, thus providing a certain elasticity. Recently, the taste for food is changing with westernization and americanisation and diversification of the living standards, and accordingly kamaboko, chikuwa, fish and shellfish sausage and other fish and shellfish "neriseihin" are improved to meet western and american requirements. However, these products are not esentially improved. More speciffically, even in improved products the net-work structure of protein remains as such and can not always saitsfy demands for westernization and americanisation and diversification of the diet. Further, for an enhancement of health it is demanded that the salt content is as low as possible or zero. Nevertheless, for producing paste meat from edible part of fish and shellfish it is necessary to add a comparatively large amount of salt so as to provide a certain degree of viscosity. This is undesired, however, from the health standpoint.

As example, Japanese Patent Publication 64-27 and Japanese Patent Disclosure 62-259565 disclose using surimi of fish and shellfish as raw material, subjecting it to cutting and kneeding with salt or other additives and flavoring agent and seasoning agents to obtain a paste meat, producing strip-like moldings of the paste meat, setting the moldings by heating to obtain a paste meat product, i.e., kamaboko, then length-wisely cutting the product with a knife or the like to obtain many filaments and, if desired, subsequently integrating these filaments by adding a binder of paste meat to produce a food resembling scallop meat or king crab leg meat. These food products are obtained by mechanically cutting "neriseihin" having usual kamaboko structure to form a fibrous structure like that of crab leg meat. Therefore, their appearance closely resembles natural scallop meat or king crab leg meat so that they can be hardly discriminated. However, although the individual filaments are thin and elongate, they retains a so-called kamaboko structure, i.e., a net or mesh-like structure, in which protein or the like is three-dimensionally coupled in a net or mesh-like form. That is, their structure is essentially different from the structure of natural scallop meat or king crab meat. In addition, the "neriseihin" having kamaboko structure contains a large amount of salt, which is undesired form the health standpoint.

Japanese Patent Disclosure 63-68059 and Japanese Patent Disclosure 63-68060 disclose methods of producing a neriseihin consisting a bundle of algined fibrous elements, i.e., fish and shellfish neriseihin, in which protein is lineaerly orientated, in order to closely resemble the structure of crab leg or shrump leg with the structure of the neriseihin itself. These methods are developed by utilizing a fact that a two-shaft extruder is used for a kneeding step to prepare a bread paste raw material. More specifically, fish or shellfish material such as surimi is mixed with additives and seasoning agents to obtain a sol material, which is then coverted into a gel material by heating it or adjusting to high viscosity. The gel material thus obtained is then kneeded and thermally fused in a two-shaft extruder. The fused material is then extruded via an outlet of the leading end of the extruder, thereby carrying out an aligned orientation of protein molecules or the like by making use of a shearing efect of the two-shaft extruder. Subsequently, each of the resultant aligned material is separated by using water. Then, the separated aligned materials are mixed with fish and shellfish surimi containing salt, and the resultant mixture is molded into a desired shape and then set, followed by boiling or heating. The neriseihin which is obtained in this way, unlike the prior art kamaboko structure, has a structure, in which filaments having protein molecules aligned in a direction are randomly coupled together and intgrated. This structure resembles the structure of natural crab or shrimp meat and fits the aim of westernization, americanisation, or diversification of living standards to a certain extent. These method utilizes the fact that a two-shaft extruder is used in a kneeding process to prepare bread paste raw material. In other words, these method in merely a method in which insteal of bread paste raw material, fish and shellfish raw material is processed with a two-shaft exturder to form oriented filaments. These oriented filaments are respectively separated and then randomly coupled together. For easily processing fish and shellfish material with a two-shaft extruder in this method, the material is pre-heated or adjusted to high viscosity by adding starch, salt, etc. in order to change its character to be close to the character of bread paste raw material. However, in spite of the fact that a product free from salt is desired, with out addition of salt a viscosity like that of bread paste raw material can not be obtained. Therefore, a desired product free from salt can not be produced. In addition, such high viscous since the material with salt is suitable for processing in a two-shaft exturder having a prior art structure. However, the prior art shaft extruder can not give a rise to saticfied orientation of protein molecules so that the resultant product has imperfect molecular orientation structure and therefore can not be used to produce a desired product. Accordingly, the material having been processed through a two-shaft extruder is disjointed by agitating it in water. The disjointed material is then mixed with salt-containing surimi as binder, and the mixture is steamed or boided to obtain a neriseihin. In such method, a finishing process is required after the process in the two-shaft extruder, and therefore, the overall process of manufacture is complicated. In addition, in the finishing process the material having a slightly imperfectly oriented structure is disjointed, and the disjointed elements are mixed with a binder before molding. Therefore, it is impossible to obtain a product, in which filaments having orientated protain molecules are aligned in a certain direction.

In greater detail, a prior art extruder, which is used to prepare bread paste material or like composed mainly of bread paste material, mainly comprises a cylindrical barrel and a screw rotatable therein. The screw is provided on a screw shaft. A material mainly composed of flour is transported by the action of the screw, and during this time individual components of the material are kneeded together to obtain bread paste material. The material in the cylindrical barrel can be heated. The heating is usually effected by heating the cylindrical barrel itself with steam or an electric heater or by introducing steam into the material. The outlet end of the cylindrical barrel is throuttled to form a nozzle or an orifice. With this throttled end, the material being transported by the screw is pressurized to increase its pressure. As extruder, a uni-shaft extruder with a single screw rotatably accommodated in a cylindriacal barrel has been dused, but recently there is a trend for using a two-shaft extruder, which has high material transportation capacity compared to the uni-shaft extruder. The two-shaft extruder is capable of change of screws depending on the characteristics of the material and purpose of processing, and also it can process materials having high oil contents. For these reasons, it is used for preparing bread paste material.

Fig. 1 shows part of a typical example of the opposite direction rotation type two-shaft extruder. As it is shown, two scrw shafts 2 and 3 are provided for rotation in opposite directions in cylindrical barrel 1. Screws 21 and 31 on these screws shafts 2 and 3 rotated in mesh with each other. Flock nuts 22 and 32 are provided at the ends of screw shafts 2 and 3, and barrel die 4 is provided in the vicinity of flock nuts 22 and 32. Barrel die 4 has substantially central orifice or nozzle-like outlet 41. In cylindrical barrel 1, two screw shafts 2 and 3 are rotated in same directions. With this rotation, material is kneeded and compressed while it is transferred by screws 21 and 31. During this time, it is heated by a heating element (not shown) in cylindrical barrel 1 and internal heat generated as the material is sheared by screws 21 and 31. Since the end of cylindrical barrel 1 is throttled with barrel die 4, material is pressurized as it is transferred. With a two-shaft extruder this pressure is increased to a pressure higher than the steam pressure. Therefore, neither effervescence nor splash taked place in cylindrical barrel 1. As material is ectruded from outlet 41 of barrel die 4 into atmosphere, it is inflated to generate high pressure steam, so that the material is liable to be scattered and become fine particles. That is, a phenomenon of flashing is liable to occur to spoil the moldability of the product. Particularly, when the material has high viscosity and contains little moisture, this trend is promoted to spoil regular orientation, and an aligned fibrous spructure can not be obtained.

To avoid this phenomenon, it is in practice to cool the material at outlet 41 of barrel die 4. However, even by cooling the material in this way the flashing can not be perfectly avoided. Rather, when the material is cooled locally at outlet 41, clogging is produed to vary the pressure in cylindrical barred 1 and sometimes result in explosive discharge of material. Therefore, it is impossible to control the discharge and to obtain a molding having a disired shape.

United States patent specification 4,816,278 disclose a method, in which, for avoiding the flashing when processing the fish or shell fish raw material a long tubular nozzle is coupled to the end of a cylindrical barrel such as to hold the material in a fused state in a first half of the nozzle while cooling the material to 100° C or below in the second half of the nozzle, thus attaining a fubrous structure. However, while the flashing can be avoided with this long nozzle, the cooling zone is constituted by only one half of the length of the nozzle and is insufficient for providing an aligned orientation. Besides, the nozzle having the first heating of fusing zone and second cooling zone has a considerable overall length and offers high contact resistance. Therefore, material can not be continously and steadily supplied into the long tubular nozzle only by with the sole extruding force of the two-shaft extruder.

### SUMMARY OF THE INVENTION

According to the invention, fish and shellfish material is charged into an inlet end of a two-shaft extruder, having the outlet end connecting with a long cooling zone via a feed pump, and the charged material is kneeded, pressureized and thermally fused in the two-shaft extruder. The resultant heated fused material is then into the cooling zone for cooling over the entire length thereof. Particularly, at the end of the two-shaft extruder, the temperature of the heated fused material is held at 150 to 260 ° C, and the heated fused material is cooled down to 60 to 110 ° C, while providing a temperature gradient of 0.05 to 0.35 °C/cm in the cooling zone in the length direction thereof. Therefore, if the fish and shellfish material is preliminarily heated or boiled into the state of a gel, in the cooling zone protein or the like components are aligned and oriented in a direction parallel to the axis of the cooling zone, resueting in parallel oriented filaments. Thus, fibrous paste meat consisting of parallel oriented filaments can be obtained. If the fish and shellfish material is processed while it is in the state of a sol, by varying both the heating condition at the outlet end of the two-shaft extruder and cooling condition in the cooling zone in the cooling zone protein and like components are aligned and oriented in an obliquely radial direction to form radially oriented filaments, thus obtainling a fibrous paste meat consisting of these radially oriented filaments.

Further, as fish and shellfish material may be used salt-containing surimi obtained by cutting and kneeding edible part of fish and shellfish with salt, and also salt-free surimi obtained by cutting and kneeding edible part of fish and shellfish without adding any salt.

Further, according to the invention there is provided an apparatus, which comprises a two-shaft extruder including two screws rotated in same direction for kneeding, pressurising and thermally fusing fish and shellfish material being forcibly fed by the screws and ectruding the resultant heated fused material from and outlet, a plurality of branch tubes coupled to the coutlet end of the two-shaft extruder, feed pumps coupled to the outlet ends of the respective branch tubes for constantly feeding out material from the two-shaft extruder while in the heated and fused state, and cooling zones independently coupled to the outlets of the respective feed pumps, in which cooling zone the heated and fused material continuously supplied from the individual feed pumps is gradually cooled from the outer periphery of the material.

Thus, it is possible to feed fish and shellfish material constantly, at a constant rate and without interruption regardless of the moisture content and viscosity of the material or regardless of whether the material is in the state of a gel or a sol. Further, a fibrous neriseihin consisting of filaments aligned in a direction can be readily obtained by varying the cooling condition of the long cooling zones through control of the revolving rate of the feed pumps.

### BRIEF DESCRIPTION OF THE DRAWINGS

Fig. 1 is a sectional view showing part of a prior art two-shaft extruder;
Fig. 2 is a sectional view showing an apparatus for manufacturing fibrous fish and shellfish neriseihin as one embodiment of the invention;
Fig. 3 is a sectional view showing an apparatus for manufacturing fibrous fish and shellfish neriseihin as a different embodiment of the invention;
Fig. 4 is a sectional view showing an apparatus for manufacturing fibrous fish and shellfish neriseihin as a further embodiment of the invention;
Fig. 5 is a sectional view showing an apparatus for manufacturing fibrous fish and shellfish neriseihin as a still further embodiment of the invention;
Fig. 6 is a perspective view showing an example of fish and shellfish neriseihin manufactured by the method according to the invention;
Fig. 7 is a sectional view taken along line A-A in Fig. 6;
Fig. 8 is a view showing the fibrous fish and shellfish neriseihin product shown in Fig. 7 with a filament teared in one direction;
Fig. 9 is a sectional view showing a fibrous fish and shellfish neriseihin according to a further embodiment of the invention.

### BEST MODE OF CARRYING OUT THE INVENTION

Referring now to Figs. 2 to 5, reference numeral 5 designates a two-shaft extruder. This two-shaft extruder 5 has the same construction as the prior art two-shaft extruder shown in Fig. 1. As shown in Fig. 1, two-shaft extruder comprises cylindrical barrel 1 and a pair of screw shafts 2 and 3. Screw shafts 2 and 3 are provided in cylingrical barrel 1, and screws 21 and 31 are provided on screw shafts 2 and 3. Screw shafts 2 and 3 are rotated in same directions. With this rotation, fish and shellfish material supplied to cylindrical barrel 1 at the rear end thereof (not shown in Fig. 1) is transported to the outlet end without reverse flow. As it is transported, fish and shellfish material is kneeded and heated by a heating element (not shown) provided on the inner wall surface of cylindrical barrel 1. With this kneeding and heating, the material is rendered to be a fused and heated material and loses its fishand shellfish structure. The material in this state is discharged from substantially central outlet 41 of barrel die 4 provided at the outlet end of cylindrical barrel 1. Outlet 41 is nozzle-or orifice-like in shape. Thus, fish and shellfish material transported by screws 21 and 31 is thermally fused under a pressurized condition, and heated fused material is extruded from outlet 41.

A plurality of branch tubes 61 and 62 coupled to the outlet end of two-shaft extruder 5, i.e., outlet 4. Branch tubes 61 and 62 are not desired to have too small longth, but they have a sufficient length as shown in Figs. 2 and 3, and at least one feed pump is coupled to the outlet end of each of these branch tubes 61 and 62. More specifically, in the case of Fig. 2 feed pumps 71 and 72 are coupled to respective branch tubes 61 and 62, while in the case of Fig. 3 two feed pumps 71 and 73 (72 and 74) are coupled to each branch tube. Feed pumps 71 to 74 are of a type normally capable of feeding heated fused material supplied through branch tubes 61 and 62 continuously and at a constant rate. As this type of pump, volume pumps, particularly gear pumps, are suitable. This is so because a volume pump is suited for extruding heated fused material constantly with rotating rotor or gear. As such pump, commerically available gear pumps are very inexpensive and can attain sufficiently constant feed.

With a plurality of branch tubes 61 and 62 coupled to the outlet end of two-shaft extruder 5, individual branch tubes 61 and 62 set to have a somewhat large length and feed pumps 71 to 74 such as volume pumps mounted at the outlet ends of branch tubes 61 and 62, troubles at outlet 41 of two-shaft extruder 5 can be precluded, and heated fused material can be very smoothly supplied to cooling zones 8 and 9 to be shown later in detail. In cooling zones 8 and 9 the heated fused material is cooled under a predetermined cooling condition through control of the revolving rate of the feed pumps, and fish and shellfish neriseihin having a fibrous structure as shown in Figs. 7 and 9 is obtained.

As has been mentioned, the kneeding, heating, shearing and fusing of fish and shellfish material in the two-shaft extruder are effected under a considerable pressure, and the pressure in the two-shaft extruder is above the vapouring pressure of water contained in the material so that inflation of fish and shellfish material or heated fused material never taked place in the two-shaft extruder. However, when the material is discharged from outlet 47 to stmosphere as in the prior art two-shaft extruder shown in Fig. 1, explosion of moisture content and intlation of heated fused material take place to result in generation of commonly termed curshed material to be extruded as small pieces or masses, that is, the heated fused material is extruded internmittently and not constantly. For this reason, as mentioned before it is in practice to cool barrel die 4 as shown in Fig. 1 or connect a nozzle, which holds heated state of material in the first half and cools material in the second half, to the outlet of a two-shaft extruder as disclosed in United States patent specification 4,816,278. With the former measure, only local cooling is provided, the clogging is rather produced at the outlet. With the latter measure, the nozzle has a large length and offers high contact resistances, and thereofore it is difficult to obtain constant extrusion of heated fused material with the sole extruding force of the two-shaft extruder.

These measures, therefore, are inadepuate for gradually cooling heated fused material under adepuate cooling condition to obtain fibrous fish and shellfish neriseihin as shown in Figs. 8 and 10 as according to the invention.

According to the inveniton, cooling zones 8 and 9 are not directly connected to the outlet ends of branch tubes 61 and 62, but at least one feed pump, 71 to 74, is provided between each of branch tubes 61 and 62 and each of cooling zones 8 and 9, while constructing branch tubes 61 and 62 to have a large length. More specifically, cooling zones 8 and 9 are constructed to have a very large length, for instance 3 to 7 m. Therefore, even if heated fused material is extruded intermittently from two-shaft extruder 5 into branch tubes 61 and 62, the intermittence is eliminated while the heated fused material is retained in branch tubes 61 and 62, and the material is charged into branch tubes 61 and 62 without being cooled but in the heated and fused state uniformly and over the entire length. If the length of branch tubes 61 and 62 is insufficient, the intermittence of extrusion of material from two-shaft extruder 5 can not be perfectly absorbed. With branch tubes 61 and 62 constructed to have a sufficient length, the extruding force of two-shaft extruder 5 is perfectly lost in branch tubes 61 and 62, that is, the capacity of feeding heated fused material to cooling zones 61 and 62 is lost. Particularly, since cooling zones 61 and 62 are cooled over the entire length, the viscosity of heated fused material is greatly increased, and material can not be constantly fed out due to increase of the contact resistance of cooling zones 61 and 62. For this reason, according the the invention the heated fused material is not fed to cooling zones 8 and 9 by making use of the extruding force of two-shaft extruder 5, but it is fed to cooling zones 8 and 9 through branch tubes 61 and 62 with interposed feed pumps. With this arrangement, the material can be fed smoothly. The cooling rate in cooling zones 8 and 9 can be readily controlled by controlling the revolving rate of feed pumps 71 to 74.

Cooling zones 8 and 9 connected to branch tubes 61 and 62 have a length of 3 to 7 m, preferably 3.5 to 5.0 m and can cool material over the entire length. Cooling zones 8 and 9 are cylindrical and have a double-wall structure with cooling water passages 83 and 93 defined between inner tubes 81 and 91 and outer tubes 82 and 92. Cooling water is introduced in the direction of arrow from rear end water inlets 84 and 94 of cooling zones 8 and 9 and drained from front end water outlets 85 and 95. As cooling water passes through cooling water passages 83 and 93, heated fused material passing through inner tubes 81 and 91 are cooled from their outer periphery. As a result, protein molecules of the material are aligned to obtain a fibrous structure as will be described later in detail.

Specifically, when fish and shellfish material is heated and fused in the two-shaft extruder, its structure is perfectly lost. When the heated fused material is cooled, the viscosity of material is increased, and this increased viscosity material is prevented against inflation with the heated fused material serving as plug. In addition, the material is forcibly aligned by cooling, and this alignment is promoted in the direction of action of shearing force generated with movement of the material and cooling thereof in the radial direction. Thus, in cooling zones 8 and 9 a fibrus structure aligned in one direction as shown in Figs. 7 and 9 can be obtained by controlling the revolving rate of pumps 71 to 74 and rate of supply and temperature of cooling water. These conditions may be determined according to the afore-noted condition, but where cooling zones 8 and 9 have a length in a range of 3 to 7 m it is suitable that heated fused material at 150 to 200 ° C at the inlet is cooled gradually to provide a temperature pradient of 0.05 to 0.35 ° C/cm to 60 to 110 ° C at the outlet.

Comparing Figs. 2 and 3, in the case of Fig. 2 feed pumps 71 and 72 are each provided on each of branch tubes 61 and 62, while in the case of Fig. 3 two feed pumps 71 and 73 (or 72 and 74) are provide on each branch tube. Feed pumps 71 to 74 serve to feed material to cooling zones 8 and 9. With the arrangement as shown in Fig. 3 the discharge of material into cooling zones 8 and 9 can be readily controlled to steadily promote the alignment and readily obtain a fibrous structure.

Products having various shapes can be obtained by varying the shape of the discharge protion of each cooling zone.

In the example of Fig. 2 or 3 two feed pumps 71 and 72 or four feed pumps 71 to 74 are coupled to the outlet end of two-shaft extruder 5 via a plurality of branch tubes 61 and 62. However, as shown in Fig. 4 and 5 a single coupling tube 63 may be coupled to two-shaft extruder 5, and one or more fed pumps 71 may be connected to the outle enc of coupling tube 63. With this arrangement 63 the same effects may be obrained by setting a comparatively large length of coupling tube 63. In the cases of Figs. 4 and 5, however, the productivity is reduced compared to the cases of Figs. 2 and 3 where branch tubes 61 and 62 are provided.

Among the examples in which two-shaft extruder 5 is coupled via single coupling tube 6 to feed pump 71, the arrangement shown in Fig. 5 is one, in which a seasoning agent, flavoring agent or the like is added in a portion between feed pump 71 and cooling zone 8. In Fig. 5, first coupling tube 10 is coupled to the outlet end of feed pump 71, second coupling tube 11 is connected to the outlet end of first coupling tube 10, and cooling zone 8 is connected to the outlet end of second coupling tube 11. Additive inlet 12 is provided on first coupling tube 10 at an intermediate position thereof, and additive inlet 17 and is driven from motor 15. Agitating unit 16 is provided between first and second coupling tubes 10 and 11 and is driven from motor 17. With the arrangement of Fig. 5, an additive is added from additibe inlet 12 to the heated fused material being fed from feed pump 71, and the resultant material is agitated in agitating unit 16 to be fed continuously to cooling zone 8.

Using the apparatus as shown above, it is possible to manufacture from fish and shellfish material a fibrous neriseihin, in which fibrous filaments containing protein are aligned with respect to one direction, i.e., the axial direction, as shown in Fig. 7. It is also possible to manufacture a fibrous neriseihin, in which fibrous filaments are radially directed toward the axis as shown in Fig. 9.

When manufacturing the former product with parallel fibrous filaments, the fish and shellfish material is used not in a state of sol but in a slightly gelated state obtained by heating before processing in the two-shaft extruder. As for material, frozen or non-frozen surimi, minched meat or other edible part of fish and shellfish is used as main material, and livestock fat, starch, gluten, bean protein, gelatine and so forth are added as desired. Where surimi or minched meat is used as main material, salt may be added as in the prior art, or may not or very lightly be added. In the latter case, the material, salt-free surimi or minched meat. The apparatus shown in Figs. 2 to 5 can process salt-free surimi or minched meat without containing any addd salt and having very low viscosity. The surimi or minched meat is conditioned as in the prior art regardless of whether salt is added or not. As an example, surimi is obtained by extracting edible part of fish and shellfish as meat, then exposing the meat to water, then dehydrating the meat and then adding sugar, sorbit and phosphate to the meat for preventing deterioration thereof. Minched meat is obtained when meat after exposing to water and dehydrating is cut cut to masses with diameter size of 1.0 cm or below through as a shieve of a conventional minched meat preparation machine. Surimi or minched meat is stored in a frozon state. When processing the meat, it is defrozen, then egg white, salt, sarch, seasoning agent, flavoring agent, etc. are add as desired, and the resultant mixture is cut to obtain a sol using a silent cutter or the like. This sol is heated at 80 to 90 ° C for 30 to 60 minutes, and then it is set by taking sufficient time, thus obtaining kamaboko, i.e., a fibrous neriseihin of fish and shellfish having a structure, in which protein is coupled in a three-dimensional net or mesh-like form. This kamaboko is then cut with a chopper or a cutter into pieces with a diametric size of 1.0 to 3 mm, preferably around 2.5 mm.

These pieces of surimi or like, obtained after heating, is supplied as raw materrial of fish and shellfish to two-shaft extruder 5 shown in Figs. 2 to 5 for kneeding, heating and fusing in the two-shaft extruder.

As suitable conditions of processing in two-shaft extruder 5, the rate of feed of raw material is 60 kg/h, screw shaft revolving rate is 170 to 200 rpm, pressure is 5 to 20 kg/cm, and cylindrical barrel temperature is 150 to 260 ° C, preferably 170 to 190 ° C. Suitably, a temperature gradient is provided in the two-shaft extruder from the inlet to the outlet.

The heated fused material obtained in this way is fed through the branch tubes and coupling tubes without being cooled in the barrel die. The branch tubes and coupling tubes are comparatively long as noted above. Therefore, while raw material of fish and shellfish, having been thermally processed in advance to reduce the water content and reduce the viscosity, is discharged intermittently from the outlet of the barrel die even if it has a high water content and a low viscosity, as it is retained in the branch tubes and coupling tubes the intermittence is lost, and the material is fed at a constant rate to feed pumps 71 to 74. In this way, the heated fused material is fed to cooling zones 8 and 9 at a ratedetermined by the revolving rate of the feed pumps. The heated fused material is gradually cooled down only after it entres cooling zones 8 and 9 having a length of 3 to 7 m, for instance. The material is cooled such as to provide a temperature gradient of 0.05 to 0.35 ° C/cm and down to 60 to 110 ° C, and a rod-like product as shown in Fig. 6 is obtained as final neriseihin 50 of fish and shellfish.

Neriseihin 50 shown in Fig. 6 is rod-like and has a circular sectional profile. Its surface 52 is smooth, and in its structure as shown in Fig. 7 innumerable filaments 51 with diameter ranging from the order of µm to the order ot millimeters, usually less than 1.0 mm, are coupled together. Individual filaments 51 are aligned with respect to one direction, typically the length direction (parallel to the axis).

Thus, holding some filaments 51 when eating the product, the product is teared apart as shown in Fig. 7. The product thus can be freely teared apart in the length direction at a desired position when eating it. Neriseihin 50 need not have a circular sectional profile, but may be oval or angular, such as triangular, tetrangular, polygonal, or hollow as well. In this neriseihin 50 individual filaments 51 are aligned with respect to the direction of extrusion of two-shaft extruder 50, i.e., length direction, and individual filaments 51 are coupled together to such an extent that they are not decoupled even when it is charged into and agitated in water. More specifically, since fish and shellfish material mainly consists of pieces preliminarily set by heating, it has low water content, and the heated fused material obtained after kneeding and heating in the two-shaft extruder has retained character of the pieces and has high viscosity. Thus, its components tend to be aligned with respect to the direction of movement of material and not substantially with respect to other directions whie the material is gradually cooled in the cooling zones. When the material is solidified by cooling while holding the above tendency, individual filaments are continuous as long filaments in the length direction, and in this state they are coupled together when they are solidified.

When manufacturing a fibrous neriseihin, in which fibrous filaments consisting of protein and like components coupled together are orientated radially, particularly radially obliquely, toward the axis, raw material of fish and shellfish is processed in the apparatus as shown in Figs 2 to 5 while it is in the state of sol. The heating condition in the two-shaft extruder and cooling condition in the cooling zones are varied to provide for slightly lower pressure, whereby the product can be readily manuactured.

As raw materia of fish and shellfish, like the above case, surimi or minched meat is used as main material, and also like the above as auxiliary material are used livestock fat, paste meat, starch, gluten, beam protein and other coupling agents, as well as seasoning agent, coloring agent and other ordinary additives. In this case, salt-free surimi or minched meat may be prepared without adding any salt. While surimi or minched meat may be prepared as in the prior art as noted before, it is directly used as raw material of fish and shellfish in the state of sol containing with a water content of 70 parts or above for processing in the apparatus as shown in Figs. 2 to 5. By so doing, neriseihin 60 of fish and shellfish having a structure as shown in Fig. 9 can be obtained. The product has radially obliquely orientated filaments 61, and its structure resembles crab pawl meat.

Generally, if material has high water content and low viscosity when it is processed using a two-shaft extruder, the extrusion moldability is spoiled, and required energy for molding is extremely increased due to high water content. For this reason, the material in the state of sol is desirably gelated in advance by heating to reduce the water content and viscosity before processing. According to the invention, however, cooling zones 8 and 9 capable of cooling over the entire length are provided via feed pumps 71 to 74 as shown in Figs. 2 to 5, and thus the material can be processed while it is in the state of sol to obtain a neriseihin having a structure as shown in Fig. 9. More specifically, with a high water content, high viscosity material, sufficient fluidity of protein and other compounds can be obtained, and filaments formed as a result of cooling and solidification from the outer periphery are subjected to a shearing action and radially orientated to form the structure. If the water content is less than 70 parts, the fluidity is spoiled, and filaments formed by cooling are not orientated radially. In the case of salt-containing surimi and minched meat, even with appearance of salt-soluble protein the viscosity remains low because of high water content. With salt-free surimi or minched meat, substantially no salt-soluble protein appears, and the viscosity is low, thus permitting satisfactory fluidity of protein or the like to be ensured.

When using raw material of fish and shellfish in the state of sol, by setting a slightly higher temperature heating condition of two-shaft extruder, particularly 10 to 20°C higher than the condition for obtaining the structure shown in Fig. 9 and correspondingly controlling the cooling condition of the cooling zones, a neriseihin having a structure as shown in Fig. 7 can be obtained.

In either case, the product obtained from the cooling zones need not have a circular sectional profile but may have any other suitable shape as well.

### Example 1

Edible part of Alaska pollack was extracted, exposed to water and the dehydrated. To this material was added 5 wt. parts of sorbit and 0.2 wt. part of phosphate, and the resultant material was cut and kneeded. To this material were added 3 wt. parts of salt and 3 wt. parts of starch, and the resultant material was sufficiently kneeded wiith a silent cutter. The resultant material, whiich was in the form of sol, was used as raw material and charged into the two-shaft extruder of the apparatus shown in Fig. 2 for processing under the following conditions to obtain a rod-like neriseihin (with a diamater of around 18 mm).

The rate of supply of material to the two-shaft extruder was 60 kg/h, revolving rate of two-shaft extruder screw shafts was 170 to 200 rpm, two-shaft extruder cylindrical barrel temperature was 170 °C at an intermediate position and 200 °C at the outlet, and the dimensions of the cooling zones were 18 mm (inner diameter) by 4 mm (length).

Stable supply and flow of material and smooth operation could be obtained by controlling the revolving rate of gear pumps as feed pumps. The material was perfectly fused and kneeded in the two-shaft extruder, and the heated fused material was cooled down to 170°C as it passed through the branch tubes and then cooled down to 95 °C in the cooling zones. The temperature gradient at the time of cooling was 0.255 °C/cm.

The rod-like neriseihin which was obtained had a slippery skin. The product had a fibrous structure as shown in the sectional view of Fig. 7, with individual filaments alinged to be parallel to the axis. The product had excellent taste and touch to the mouth. It was partly teared as shown in Fig. 7. It was seen that the product could be teared over the entire length in the direction of filament alignment without being broken at all.

To 50 parts of Alaska pollack surimi obtained in the above way were added 30 parts of pig meat, 10 parts of water and 2.6 parts of salt as well as flavoring agent, seasoning agent and coloring agent, and the resultant material was kneeded with a silent cutter to obtain a sol. Subsequently, the sol was boiled at 90°C for 60 minutes to obtain a gel, which was then processed with a chopper into pieces with a diameter of 5 mm. These pieces were processed as raw material with the apparatus shown in Fig. 2 under the same conditions as above, thus obtaining a system having a structure as shown in Fig. 2. This product was cut to a suitable length, then packed and sterilized to obtatin a novel sausage as shown in Fig. 8, with individual filaments capable of being teared in the longitudinal direction.

### Example 2

Instead of Alaska pollack, edible part of krill belonging to mollusc and cuctus belonging to crustacea was exposed to water, dehydrated, kneeded and cut to obtain surimi. To this surimi was added salt and starch as in Example 1, and the resultant mixture was heated into a gel and cut with a chopper into pieces with a diameter of 2.0 mm.

These pieces were processed with the apparatus shown in Fig. 2 under the same conditions as in Example 1 to obtain a neriseihin having a structure as shown in Fig. 7.

### Example 3

Edible part of Alaska pollack was extracted and, as in Example 1, was exposed to water and dehydrated. To this material were added 5 parts of sorbit and 0.2 part of phosphate. The resultant mixture was cut to obtain surimi. To this surimi were added 3 wt. parts of salt and 3 parts of starch. The resultant mixture was kneeded with a silent cutter to obtain a sol. This sol contained 73 wt. % of water, and it was supplied to the two-shaft extruder of the apparatus shown in Fig. 2 for processing under conditions of a material feed rage of 35 kg/h, a screw shaft revolving rate of 175 rpm, cylindrical barrel intermediate temperature of 170 °C and a barrel outlet temperature of 220 °C. In the cooling zones, the material was cooled with a temperature gradient of 0.325 °C/cm down to 95°C.

As a result, a rod-like neriseihin as shown in Fig. 6 could be obtained. This neriseihin, like that in Exam ple 1, had a thin slippery skin, and in its sectional profile individual filaments were radially obliquely orientated. This neriseihin was teared by holding a portion, and at this time filaments were teared in the direction of their orientation, i.e., a radially oblique direction.

The surimi obtained in the above way was kneeded without addition of any salt but together with only 3 parts of starch into a sol, which was then processed in the same way as above to obtain a neriseihin having a similar structure.

### Example 4

Surimis of krills and cuctus in Example 2 were converted to sol with and without addition of 3 parts of salt, and these sols were similarly processed to obtain neriseihins as shown in Fig. 9, in same condition as shown in Example 2, except the condition, such as barrel intermediate temperature equal to 165°C and barrel leading end temperature equal to 200 °C.

## Claims

1. A method of manufacturing a fibrous neriseihin of fish or shellfish with a fibrous structure, comprising the steps of:
- feeding a raw material consisting of fish or shellfish into an inlet of a twin screw extruder (1, 2, 4) having an outlet nozzle (41) connected to a cooling zone;
- kneading, pressurizing and thermally fusing said raw material in said extruder in a manner, such that the resultant fused material in a gel state has a temperature ranging form 150 to 260°C; and
- extruding said fused material from the outlet nozzle (41) of said extruder (1, 2, 4) into at least one tube (61, 62, 63) coupled to the cooling zone,
characterised by the steps of:
a) providing a momentary stay of said thermally fused material passing through said tube (61, 62, 63), said momentary stay serving to eliminate an intermittent flow of said fused material passing through said outlet nozzle (41);
b) passing said fused material through at least one feed pump (71, 72, 73, 74) respectively connected with the outlet of each of said tubes (61, 62, 63) by which feed pump (71 - 74) said fused material is fed into an elongate cooling zone (8, 9) having a length in the range of 3 to 7 meters;
c) gradually cooling said fused material in said elongated cooling zone (8, 9) with a temperature gradient of 0.05 to 0.35 °C/cm along the lengthwise direction of the cooling zone (8, 9) to a temperature within a range from 60 to 110 °C and
d) providing a control of the feeding rate of said feed pump (71 - 74) and a cooling degree, to which said fused material is cooled during the course of flowing thereof through said elongated cooling zone (8, 9), resulting in the fibrous neriseihin with said fibrous structure in which a plurality of fibrous filaments of fish or shellfish are respectively extruded and linearly aligned.

2. An apparatus for carrying out the method of claim 1, comprising a twin screw extruder including two screws (21, 31) rotated in same direction,
said extruder serving to knead, pressurize and thermally fuse a raw material consisting mainly of fish and shellfish material and the like,
at least one tube (61 - 63) with inlets thereof respectively connected to the outlet (41) of said extruder (1, 2, 4),
characterised in that
said tube (61 - 63) provides the fused material passing through said tube with a momentary stay enabling to eliminate the intermittent flow of said fused material, at least one feed pump (71 - 74) is provided having inlets thereof respectively connected to the outlet of said tube (61 - 63), said feed pump (71 - 74) serving to feed the fused material flowing out of an outlet of said tube at a constant rate without intermittent flow of said fused material; and
at least one elongated cooling zone (8 ,9) is provided having inlets respectively connected to the outlet of each feed pump (71 - 74), said cooling zone (8, 9) serving to gradually cool the fused material continuously fed from said feed pump (71 - 74), wherein said cooling zone (8, 9) has a length in the range of 3 to 7 meters.

3. The apparatus according to claim 2, wherein said branch tubes are constituted by a single long coupling tube connecting the outlet of said extruder with the inlet of said cooling zone.

4. The apparatus according to claim 2, wherein each feed pump consists of volume type gear pumps.

5. The apparatus according to claim 2, wherein a plurality of feed pumps (71 - 74) are provided between branching coupling tubes (61, 62) and a plurality of cooling zones (8, 9).

6. The apparatus according to one of the claims 2 to 5, wherein each of said cooling zones (8, 9) is cylindrical in shape and has an outer annular cooling water passage.

## Patentansprüche

1. Verfahren zum Herstellen eines faserigen "Neriseihin" aus Fisch oder Schaltentieren mit einer faserigen Struktur mit den folgenden Schritten:
- Zuführen eines Rohmaterials, bestehend aus Fisch oder Schalentieren, in einen Eingang eines Doppelschneckenextruders (1, 2, 4), der eine mit einer Kühlzone verbundene Ausgangsdüse (41) aufweist;
- Kneten, Drücken und thermisches Schmelzen des Rohmaterials in dem Extruder in einer solchen Weise, daß das resultierende geschmolzene Material in einem Gel-Zustand eine Temperatur in einem Bereich von 150 bis 260°C hat; und
- Extrudieren des geschmolzenen Materials von der Ausgangsdüse (41) des Extruders (1, 2, 4) in mindestens ein mit der Kühlzone verbundenes Rohr (61, 62, 63), gekennzeichnet durch die folgenden Schritte:
a) Vorsehen eines kurzzeitigen Stillstands des sich durch das Rohr (61, 62, 63) hindurchbewegenden thermisch geschmolzenen Materials, wobei der kurzzeitige Stillstand dazu dient, einen diskontinuierlichen Fluß des sich durch die Ausgangsdüse (41) bewegenden geschmolzenen Materials zu beseitigen;
b) Leiten des geschmolzenen Materials durch mindestens eine Förderpumpe (71, 72, 73, 74), die jeweils mit dem Ausgang eines jeden Rohrs (61, 62, 63) verbunden ist, mittels welcher Förderpumpe (71-74) das geschmolzene Material in eine langgestreckte Kühlzone (8, 9) eingespeist wird, die eine Länge im Bereich von 3 bis 7 Meter hat;
c) allmähliches Kühlen des geschmolzenen Materials in der langgestreckten Kühlzone (8, 9) mit einem Temperaturgradienten von 0,05 bis 0,35°C/cm entlang der Längsrichtung der Kühlzone (8, 9) auf eine Temperatur innerhalb eines Bereichs von 60 bis 110°C und
d) Bereitstellen einer Steuerung der Zuführgeschwindigkeit der Förderpumpe (71-74) und eines Kühlungsmaßes, auf welches das geschmolzene Material, während es durch die langgestreckte Kühlzone (8, 9) fließt, gekühlt wird, wodurch das faserige Neriseihin mit der faserigen Struktur entsteht, bei welcher eine Mehrzahl von faserigen Filamenten von Fisch oder Schalentieren jeweils extrudiert und linear ausgerichtet sind.

2. Vorrichtung zum Durchführen des Verfahrens nach Anspruch 1 mit einem Doppelschneckenextruder mit zwei Schnecken (21, 31), die sich in die gleiche Richtung drehen, wobei der Extruder dazu dient, ein hauptsächlich aus Fisch- und Schalentier-Material und dergleichen bestehendes Rohmaterial zu kneten, drücken und thermisch zu schmelzen, und mindestens einem Rohr (61-63), dessen Eingänge jeweils mit dem Ausgang (41) des Extruders (1, 2, 4) verbunden sind,
dadurch gekennzeichnet, daß
das Rohr (61-63) dafür sorgt, daß das geschmolzene Material sich durch das Rohr mit einem kurzzeitigen Stillstand bewegt, um den diskontinuierlichen Fluß des geschmolzenen Materials zu beseitigen,
mindestens eine Förderpumpe (71-74) vorgesehen ist, die Eingänge aufweist, die jeweils mit dem Ausgang des Rohrs (61-63) verbunden sind, wobei die Förderpumpe (71-74) dazu dient, das geschmolzene Material, das aus einem Ausgang des Rohrs fließt, mit einer konstanten Geschwindigkeit ohne einen diskontinuierlichen Fluß des geschmolzenen Materials zu fördern; und daß
mindestens eine langgestreckte Kühlzone (8, 9) mit Eingängen vorgesehen ist, die jeweils mit dem Ausgang jeder Förderpumpe (71-74) verbunden sind, wobei die Kühlzone (8, 9) dazu dient, das geschmolzene Material, das kontinuierlich von der Förderpumpe (71-74) gefördert wird, allmählich zu kühlen, wobei die Kühlzone (8, 9) eine Länge im Bereich von 3 bis 7 Meter hat.

3. Vorrichtung nach Anspruch 2, bei der die Zweigrohre durch ein einzelnes langes Verbindungsrohr gebildet werden, das den Ausgang des Extruders mit dem Eingang der Kühlzone verbindet.

4. Vorrichtung nach Anspruch 2, bei der jede Förderpumpe aus Zahnradpumpen vom Volumentyp besteht.

5. Vorrichtung nach Anspruch 2, bei der eine Mehrzahl von Förderpumpen (71-74) zwischen verzweigenden Verbindungsrohren (61, 62) und einer Mehrzahl von Kühlzonen (8, 9) vorgesehen ist.

6. Vorrichtung nach einem der Ansprüche 2 bis 5, bei der jede der Kühlzonen (8, 9) von zylindrischer Form ist und einen äußeren ringförmigen Kühlwasserdurchgang aufweist.

## Revendications

1. Procédé de fabrication d'un produit fibreux "neriseihin" à base de poisson ou de mollusques et crustacés avec une structure fibreuse, comprenant les étapes suivantes :
- l'apport d'une matière première formée de poisson ou de mollusques et crustacés dans une entrée d'une extrudeuse à double vis (1, 2, 4) comportant un ajutage de sortie (41) relié à une zone de refroidissement;
- le malaxage, la pressurisation et la fusion thermique de la matière première dans l'extrudeuse d'une manière telle que la matière fondue résultante à l'état de gel ait une température allant de 150 à 260°C; et
- l'extrusion de la matière fondue de l'ajutage de sortie (41) de l'extrudeuse (1, 2, 4) dans au moins un tube (61, 62, 63) couplé à la zone de refroidissement,
caractérisé par les étapes suivantes :
a) la prévision d'un arrêt momentané de la matière fondue thermiquement traversant le tube (61, 62, 63) susdit, cet arrêt momentané servant à éliminer un écoulement intermittent de la matière fondue passant par l'ajutage de sortie (41);
b) le passage de la matière fondue par au moins une pompe d'alimentation (71, 72, 73, 74) reliée respectivement à la sortie de chacun des tubes (61, 62, 63), pompe d'alimentation (71-74) au moyen de laquelle la matière fondue est amenée dans une zone de refroidissement allongée (8, 9) ayant une longueur allant de 3 à 7 mètres;
c) le refroidissement progressif de la matière fondue dans la zone de refroidissement allongée (8, 9) avec un gradient de température de 0,05 à 0,35°C/cm le long de la direction longitudinale de la zone de refroidissement (8, 9) à une température dans l'intervalle de 60 à 110°C, et
d) la réalisation d'un contrôle du taux d'alimentation de la pompe d'alimentation (71-74) et d'un degré de refroidissement, auquel la matière fondue est refroidie au cours de son écoulement dans la zone de refroidissement allongée (8, 9), conduisant au produit neriseihin fibreux avec la structure fibreuse dans laquelle une pluralité de filaments fibreux de poisson ou de mollusques et crustacés est respectivement extrudée et alignée linéairement.

2. Appareil pour la mise en oeuvre du procédé suivant la revendication 1, comprenant une extrudeuse à double vis comprenant deux vis (21, 31) tournant dans le même sens, ladite extrudeuse servant à malaxer, pressuriser et fondre thermiquement une matière première formée principalement de matière à base de poisson et de mollusques et crustacés et analogues, au moins un tube (61-63) dont les entrées sont reliées respectivement à la sortie (41) de l'extrudeuse (1, 2, 4), caractérisé en ce que le tube (61-63) permet d'y faire passer la matière fondue avec un arrêt momentané permettant d'éliminer l'écoulement intermittent de la matière fondue, au moins une pompe d'alimentation (71-74) est prévue dont les entrées sont reliées respectivement à la sortie du tube (61-63), la pompe d'alimentation (71-74) servant à faire écouler la matière fondue par une sortie dudit tube à un taux constant sans un écoulement intermittent de la matière fondue et au moins une zone de refroidissement allongée (8, 9) est prévue comportant des entrées reliées respectivement à la sortie de chaque pompe d'alimentation (71-74), la zone de refroidissement (8, 9) servant à refroidir progressivement la matière fondue amenée de façon continue de la pompe d'alimentation (71-74), la zone de refroidissement (8, 9) précitée ayant une longueur allant de 3 à 7 mètres.

3. Appareil suivant la revendication 2, dans lequel les tubes de dérivation sont constitués par un seul long tube d'accouplement reliant la sortie de l'extrudeuse à l'entrée de la zone de refroidissement susdite.

4. Appareil suivant la revendication 2, dans lequel chaque pompe d'alimentation est constituée de pompes à engrenage du type volumique.

5. Appareil suivant la revendication 2, dans lequel une pluralité de pompes d'alimentation (71-74) est prévue entre des tubes d'accouplement et de ramification (61, 62) et une pluralité de zones de refroidissement (8, 9).

6. Appareil suivant l'une quelconque des revendications 2 à 5, dans lequel chacune des zones de refroidissement (8, 9) est de forme cylindrique et comporte un passage d'eau de refroidissement annulaire extérieur.
